# NEUE EUROPÄISCHE PATENTSCHRIFT

(11) **EP 0 616 626 B2**
(45) Veröffentlichungstag und Bekanntmachung des Hinweises auf die Entscheidung über den Einspruch: **17.11.1999**
(45) Hinweis auf die Patenterteilung: 11.10.1995
(21) Anmeldenummer: 92924653.6
(22) Anmeldetag: 03.12.1992
(51) Int. Cl.: C09C 1/00, C09C 3/06

(54) **GLANZPIGMENTE AUF DER BASIS VON MEHRFACH BESCHICHTETEN PLÄTTCHENFÖRMIGEN SILIKATISCHEN SUBSTRATEN**
GLOSSY PIGMENTS BASED ON PLATELIKE SILICATE SUBSTRATES PROVIDED WITH MULTIPLE COATINGS
PIGMENTS BRILLANTS A BASE DE SUBSTRATS EN SILICATE EN FORME DE PAILLETTES A PLUSIEURS COUCHES DE REVETEMENT

(30) Priorität: 13.12.1991 DE 4141069
(43) Veröffentlichungstag der Anmeldung: 28.09.1994
(73) Patentinhaber: BASF Aktiengesellschaft, 67063 Ludwigshafen (DE)
(72) Erfinder: SCHMID, Raimund, D-6730 Neustadt (DE); MRONGA, Norbert, D-6915 Dossenheim (DE); OCHMANN, Harald, D-6701 Dannstadt (DE); ADEL, Joerg, D-6700 Ludwigshafen (DE)
(86) Internationale Anmeldenummer: EP9202793
(87) Internationale Veröffentlichungsnummer: WO9312182

(56) Entgegenhaltungen:
- EP-A- 0 045 851
- EP-A- 0 106 235
- DE-C- 2 557 796
- FR-A- 1 326 900
- US-A- 3 536 520
- US-A- 3 582 382
- ULLMANNS ENCYKLOPÄDIE DER TECHNISCHEN CHEMIE, 4. Auflage, Bd. 14, 1977, Seiten 633-635

## Beschreibung

Die vorliegende Erfindung betrifft neue Glanzpigmente auf der Basis von mehrfach beschichteten plättchenförmigen silikatischen Substraten, erhältlich durch weiteres Belegen bereits mit einer ersten Schicht aus farblosem oder selektiv absorbierendem Metalloxid belegten Substraten
a) zunächst mit einer zweiten, nichtselektiv absorbierenden Schicht, im wesentlichen bestehend aus Kohlenstoff, Metall und/oder Metalloxid, und
b) gewünschtenfalls anschließend mit einer dritten Schicht aus farblosem oder selektiv absorbierendem Metalloxid, wobei die dritte Schicht im Falle einer im wesentlichen aus Kohlenstoff bestehenden zweiten Schicht zwingend ist und
wobei
die Kohlenstoffschicht (Schritt a) durch thermische Zersetzung von sauerstoffhaltigen Kohlenwasserstoffen, die bei zwei enthaltenen Kohlenstoffatomen mindestens ein Sauerstoffatom enthalten,
die Metallschicht (Schritt a) durch Gasphasenzersetzung flüchtiger Verbindungen dieser Metalle in einem Inertgas und
die Metalloxidschicht (Schritt a und, oder b) durch Gasphasenzersetzung flüchtiger Verbindungen dieser Metalle in Gegenwart von Sauerstoff, Wasserdampf oder deren Mischungen auf die im Fall a) mit einer ersten Metalloxidschicht und im Fall b) zusätzlich mit einer nichtselektiv absorbierenden Schicht (a) belegten Substrate aufgebracht wird.

Weiterhin betrifft die Erfindung neue Glanzpigmente auf der Basis von mehrfach beschichteten plättchenförmigen silikatischen Substraten mit
A) einer ersten Schicht aus farblosem oder selektiv absorbierendem Metalloxid,
B1) einer zweiten, nichtselektiv absorbierenden Schicht, im wesentlichen bestehend aus metallischem Eisen, Molybdän und/oder Wolfram, oder
B2) einer zweiten, nichtselektiv absorbierenden, aus Kohlenstoff bestehenden Schicht und
C) gewünschtenfalls einer dritten Schicht aus farblosem oder selektiv absorbierendem Metalloxid, wobei die dritte Schicht im Falle einer aus Kohlenstoff bestehenden zweiten Schicht zwingend ist,
die durch den gleichmäßigen und filmartigen Aufbau der Schichten gekennzeichnet sind.

Außerdem betrifft die Erfindung die Herstellung dieser Glanzpigmente sowie ihre Verwendung zum Einfärben von Lacken, Druckfarben, Kunststoffen, Zubereitungen der dekorativen Kosmetik, Gläsern und keramischen Produkten.

Glanz- oder Effektpigmente werden in zunehmendem Maße in vielen Bereichen der Technik eingesetzt. beispielsweise in Automobillacken, in der dekorativen Beschichtung, der Kunststoffeinfärbung, in Druck-, Anstrich-, insbesondere Sicherheitsfarben sowie in der Kosmetik.

Ihre optische Wirkung beruht auf der gerichteten Reflexion an überwiegend flächig ausgebildeten, ausgerichteten metallischen oder stark lichtbrechenden Pigmentteilchen. Je nach Art der Pigmentteilchen spricht man auch von Metalleffektpigmenten (z.B. Aluminium, Zink, Kupfer oder deren Legierungen) oder Perlglanzpigmenten (z.B. auf Basis beschichteter Glimmer wie Muskovit, Phlogopit und Biotit. Talkum oder Glas).

Die Glanzpigmente können durch Beschichtung der Ausgangssubstrate mit dünnen Filmen aus hochbrechenden Oxiden wie Chrom(III)oxid, vor allem Eisenoxid und Titanoxid mehrphasig aufgebaut sein. Durch Interferenz und gegebenenfalls Absorption ergibt sich in diesen Fällen in Abhängigkeit von der Dicke der Oxidschicht eine Vielzahl von Farbtonvariationen; man nennt diese Pigmente daher auch Interferenzpigmente.

Durch die gerichtete Reflexion des einfallenden Lichtes an den plättchenförmigen Pigmentteilchen zeigen die z.B. in Lack ausgerichteten beschichteten Glanzpigmente Goniochromatizität, d.h. der Farbeindruck (Helligkeit und/oder Farbton und/oder Farbsättigung) ihrer Lackierung ändert sich in Abhängigkeit vom Belichtungs- bzw. Betrachtungswinkel. Diese Effekte lassen sich auf ein kompliziertes Zusammenspiel von Reflexion und Transmission des auftreffenden Lichts zurückführen, wobei dessen Farbe durch an den Pigmentteilchen hervorgerufene Phänomene wie Interferenz an dünnen Schichten und Absorption an farbigen Zentren verändert werden kann.

Bekanntermaßen werden bereits mit Oxid belegte plättchenförmige silikatische Substrate zur Erzielung spezieller Eigenschaften mit weiteren Schichten belegt.

So ist aus der EP-A-313 280 die weitere Belegung mit naßchemisch stromlos abgeschiedenen Metallen, darunter auch Cobalt, bekannt. In der DE-A-38 25 702 wird die weitere Beschichtung mit Metallen, u.a. Chrom und Nickel, naßchemisch durch Reduktion aus einer Metallsalzlösung oder durch Vakuumaufdampfung vorgenommen. Weiterhin können nach der US-A-3 053 683 unbelegte Glaspartikel durch Gasphasenzersetzung von Nickeltetracarbonyl, Dibenzolchrom oder -molybdän mit diesen Metallen beschichtet werden.

In der DE-A-11 65 182 ist die Belegung oxidbeschichteter Glimmerplättchen mit Kohlenstoff beschrieben, die durch Pyrolyse von Kohlenwasserstoffen oder höheren Fettsäuren bzw. ihren Derivaten erfolgt, welche, um die Bildung von freien Rußteilchen zu vermeiden, Sauerstoff höchstens in untergeordneten Mengen enthalten sollen.

Aus der DE-A-36 17 430 ist es schließlich bekannt, mit Oxid belegte Glimmerplättchen mit einer weiteren Eisen(II)oxid enthaltenden Schicht zu versehen, die aus Wüstit, Magnetit oder weiteren Mischoxiden bestehen kann. Diese Schichten wurden entweder naßchemisch durch Oxidation einer Eisen(II)-salzlösung und anschließende Trocknung oder durch Reduktion einer bereits auf die Glimmerteilchen zusätzlich aufgebrachten Eisen(III)oxidschicht erhalten. Außerdem können diese Pigmente noch mit einer Deckschicht aus farblosen Oxiden belegt werden.

Die bekannten mehrfach beschichteten Glimmerpigmente können jedoch in verschiedener Hinsicht nicht befriedigen. Das Hauptproblem besteht darin, daß die aufgebrachten Schichten nicht homogen zusammenhängend aufgebaut sind. Vielmehr werden insbesondere bei der naßchemischen Abscheidung der Metalle oder Metalloxide die Plättchenoberfläche nicht gleichmäßig bedeckende, inselartige Schichtfragmente beobachtet. Derartig beschichtete Pigmente sind weder für eine weitere Beschichtung, beispielsweise zur Erzielung besonderer Farbeffekte mit einem farbigen Metalloxid, geeignet, noch zeigen sie trotz aufgebrachter Metall- oder Magnetitschicht gegenüber den nur oxidbeschichteten Glimmerplättchen erhöhte Leitfähigkeit.

Der Erfindung lag daher die Aufgabe zugrunde, neue Glanzpigmente bereitzustellen, welche die genannten Nachteile nicht aufweisen und damit vorteilhaft für die gewünschten Verwendungszwecke eingesetzt werden können.

Demgemäß wurden die eingangs definierten Glanzpigmente gefunden.

Weiterhin wurde das hierdurch definierte Verfahren zur Herstellung dieser Pigmente gefunden.

Außerdem wurde die Verwendung dieser Pigmente zur Einfärbung von Lacken, Druckfarben, Kunststoffen, Zubereitungen der dekorativen Kosmetik und keramischen Produkten gefunden.

Als plättchenförmige silikatische Substrate für die erfindungsgemäßen mehrfach beschichteten Glanzpigmente kommen insbesondere helle bzw. weiße Glimmer in Betracht, wobei Schuppen von vorzugsweise naß vermahlenem Muskovit besonders bevorzugt sind. Selbstverständlich sind auch andere natürliche Glimmer, wie Phlogopit und Biotit, künstliche Glimmer, Talk- und Glasschuppen geeignet.

Die zum Einsatz kommenden Substratteilchen sind bereits mit einer ersten Schicht aus hochbrechendem, farblosem oder selektiv absorbierendem (d.h. nicht schwarzem) Metalloxid, beispielsweise Titan-, Zirkon-, Zinn-, Chrom-, Eisen-, Aluminium-, Silicium- und Zinnoxid und Wismutoxychlorid oder deren Mischungen, belegt. Bevorzugt sind dabei Beschichtungen mit Eisen(III)oxid oder Zirkondioxid und besonders bevorzugt mit Titandioxid.

Diese einfach beschichteten Pigmente sind allgemein bekannt und beispielsweise in den DE-C 14 67 468, EP-A-45 851, DE-A-32 37 264 und DE-A-36 17 430 beschrieben. Metalloxidbeschichtete Glimmerplättchen sind auch unter dem Namen Iriodin® (E. Merck, Darmstadt), Flonac® (Kemira Oy, Pori, Finnland) oder Mearlin® (Mearl Corporation, New York) im Handel.

Selbstverständlich kann man auch unbeschichtete Substrate verwenden und diese durch die erfindungsgemäße Gasphasenzersetzung entsprechender Metallverbindungen mit einer ersten Metalloxidschicht belegen.

Die Größe der Substratteilchen ist an sich nicht kritisch und kann auf den jeweiligen Anwendungszweck abgestimmt werden. In der Regel haben die Teilchen größte Durchmesser von etwa 1 bis 200 µm, insbesondere etwa 5 bis 100 µm, und Dicken von etwa 0,1 bis 5 µm, insbesondere etwa 0,5 µm.

Bei den erfindungsgemäßen Glanzpigmenten sind die mit einer ersten Schicht aus hochbrechendem, farblosem oder selektiv absorbierendem Metalloxid beschichteten Substrate mit einer zweiten, nichtselektiv absorbierenden Schicht belegt. Diese kann aus Kohlenstoff, Metallen, insbesondere solchen, die durch Gasphasenzersetzung flüchtiger Verbindungen aufgebracht werden können wie Eisen, Cobalt, Nickel, Chrom, Molybdän und Wolfram, oder schwarzen Metalloxiden wie Magnetit, Nickeloxid, Cobaltoxiden (CoO, Co₃O₄) und Vanadinoxiden (VO₂, V₂O₃) sowie deren Mischungen, wie besonders Eisen und Magnetit, bestehen.

Diese zweite Beschichtung kann vorteilhaft nach dem weiter unten beschriebenen erfindungsgemäßen Verfahren durch thermische Zersetzung geeigneter Ausgangsverbindungen erfolgen.

Die so erhältlichen schwarzen Schichten zeichnen sich durch gleichmäßigen, homogenen, filmartigen Aufbau aus. Sie sind für Licht halbdurchlässig, d.h. sie senken den Weißsockel des auftreffenden und reflektierten Lichtes ab und bewirken so eine Verstärkung der Interferenzfarbe des Substrates und setzen bei entsprechender Schichtdicke auch die Interferenzreihe des Substrates fort.

Außerdem zeigen die erfindungsgemäßen zweifach beschichteten Glanzpigmente bei ihrer Applikation, z.B. in Lack, Druck oder Kunststoff, einen interessanten Farbflop. Je nach Belichtungs- bzw. Betrachtungswinkel erscheint die durch Interferenz der ersten Oxidschicht oder die durch Absorption der zweiten Schicht entstehende Farbe, die abhängig vom jeweiligen Material von Schwarz bis Grau reichen und sowohl über die Dicke als auch über Zusammensetzung der Schicht gesteuert werden kann.

Darüber hinaus zeigen die Applikationen der erfindungsgemäßen zweifach beschichteten Pigmente hohen Glanz und gutes Deckvermögen, das durch die Dicke der zweiten Schicht beeinflußt werden kann. Je dicker die schwarzen Schichten sind, um so deckender sind naturgemäß die Pigmente. Zu dicke Schichten können aber auch den Interferenzeffekt überdecken. Im allgemeinen betragen die Schichtdicken zwischen 0,1 und 100 nm, vorzugsweise 0,2 bis 20 nm. Die optimale Schichtdicke wird man in der Regel auf den jeweiligen Anwendungszweck abstimmen.

Bestehen die erfindungsgemäßen schwarzen Schichten aus Metall oder Magnetit, so zeigen die erfindungsgemäßen Pigmente neben den interessanten Farbeffekten auch elektrische Leitfähigkeit, die mit Werten zwischen etwa 10⁻⁴ bis 1 S/cm deutlich höher ist als die der nur mit Titandioxid beschichteten Glimmerteilchen, die Leitfähigkeiten in der Größenordnung von 10⁻⁸ bis 10⁻¹⁰ S/cm haben. Auch die Höhe der Leitfähigkeit ist von der Schichtdicke abhängig, die zweckmäßigerweise zwischen etwa 2 bis 100 nm liegen sollte und ebenfalls im Einzelfall anzupassen ist.

Weiterhin kann es von Vorteil sein, die zweifach beschichteten Glanzpigmente noch mit einer Deckschicht aus farblosem oder selektiv absorbierendem Metalloxid zu belegen. In diesem Fall handelt es sich bei den schwarzen Zwischenschichten vorzugsweise um dünne Schichten von etwa 2 bis 30 nm. Diese dritte erfindungsgemäße Schicht kann zum Schutz der schwarzen Schicht für bestimmte Anwendungszwekke dienen. Auch erhält man auf diese Weise Pigmente mit besonders gutem Deckvermögen. Werden farbige Oxide in der Deckschicht eingesetzt, so erfolgt der Farbflop von der jeweiligen Interferenzfarbe zur Eigenfarbe des Oxids, im Fall von Eisen(III)oxid also z.B. nach Rotbraun. Allgemein tragen die Oxidschichten als dünne Schichten zur Interferenz des Pigmentes bei, sie führen die Interferenzreihe an der vom Ausgangsmaterial bestimmten Stelle fort. Durch die dreifache Beschichtung wird also die Farbpalette der Glanzpigmente vorteilhaft erweitert.

In den erfindungsgemäßen dritten Schichten können die üblichen zur Beschichtung von Interferenzpigmenten geeigneten hochbrechenden, farblosen und farbigen, jedoch nicht schwarzen Metalloxide eingesetzt werden. Beispielsweise seien Titan-, Zirkon-, Zinn-, Chrom-, Eisen-, Aluminium-, Silicium- und Zinkoxid sowie deren Mischungen genannt. Besonders bevorzugt sind Eisen(III)oxid, Titan- und Zirkondioxid und deren Gemische. Im Einzelfall wird die dritte Schicht aus Oxid zweckmäßigerweise auf die zweite, schwarze Schicht abgestimmt.

Die Dicke der dritten Schicht ist an sich nicht kritisch, im allgemeinen beträgt sie etwa 1 bis 400 nm, insbesondere 5 bis 200 nm.

Diese dritte Beschichtung kann ebenfalls vorteilhaft nach dem erfindungsgemäßen Verfahren durch Gasphasenzersetzung geeigneter Metallverbindungen aufgebracht werden.

Bei dem erfindungsgemäßen Verfahren zur Herstellung der mehrfach beschichteten plättchenförmigen silikatischen Substrate werden die einzelnen Beschichtungen jeweils durch thermische Zersetzung geeigneter Ausgangsverbindungen in Gegenwart der zu belegenden Substratteilchen vorgenommen.

Zur Belegung der metalloxidbeschichteten Substrate mit Kohlenstoff werden sauerstoffhaltige Kohlenwasserstoffe eingesetzt, die bei zwei enthaltenen C-Atomen mindestens ein O-Atom enthalten, wie Polyvinylalkohol, vor allem Sorbit, und insbesondere Verbindungen der Summenformel (CH₂O)ₙ, in der n für eine monomere Einheit in der Regel für 1 bis 6, vor allem für 5 bis 6 steht. Dabei handelt es sich bevorzugt um niedermolekulare Zucker wie Glucose und Dextrose, daneben sind auch höhermolekulare Zucker wie Stärke und polymere Verbindungen wie Polyoxymethylen geeignet.

Zweckmäßigerweise bringt man diese Verbindungen, insbesondere Zucker, zunächst feinverteilt auf die Substratoberfläche auf. Besonders vorteilhaft wird dazu ein dicker wäßriger Brei aus Substrat und Zucker hergestellt. Es ist aber auch möglich, das Substrat in einer wäßrigen Zuckerlösung zu rühren und die auf diese Weise mit einem wäßrigen Zuckerfilm überzogenen Substratteilchen anschließend abzufiltrieren. Weiterhin können Substrat und besonders fein gemahlener Zucker auch trocken gemischt werden. In der Regel werden 0,1 bis 20 Gew.-%, vorzugsweise 1 bis 10 Gew.-% Zucker, bezogen auf die Substratmenge, eingesetzt.

Die thermische Zersetzung der zweckmäßigerweise z.B. in einem Trockenschrank oder im Sprühtrockner vorgetrockneten Zuckerschicht zu Kohlenstoff kann dann in einem Drehkugelofen erfolgen, wobei je nach Ausgangsverbindungen Temperaturen von im allgemeinen 100 bis 700°C, insbesondere 200 bis 550°C erforderlich sind. Vorzugsweise wird dabei unter einem Schutzgas wie Stickstoff gearbeitet. Das entstehende Wasser dampft ab, und der Kohlenstoff bleibt als homogener, optisch halbdurchlässiger Film auf dem Substrat zurück. Von besonderem Vorteil sind bei der erfindungsgemäßen Beschichtung mit Kohlenstoff die niedrigen Reaktionstemperaturen von unter 500°C, die Beschädigungen des Trägermaterials verhindern.

Die weiteren Schichten, sowohl die aus Metall oder schwarzem Metalloxid bestehende zweite Schicht als auch die dritte Metalloxidschicht, werden beim erfindungsgemäßen Verfahren durch Gasphasenzersetzung flüchtiger Verbindungen der Metalle in Gegenwart bewegter Substratteilchen aufgebracht. Diese Belegung kann vorteilhaft in einem beheizbaren Wirbelschichtreaktor, wie er beispielsweise in der EP-A-45 851 beschrieben ist, vorgenommen werden, in dem die Substratteilchen zunächst mit einem Wirbelgas fluidisiert und auf die für die Zersetzung der jeweiligen Metallverbindung erforderliche Temperatur von in der Regel 70 bis 350°C erhitzt werden. Die verdampften Metallverbindungen und die gegebenenfalls zur Zersetzung benötigten Gase werden dann über getrennte Düsen eingetragen.

Zur Abscheidung der metallischen Schichten werden bevorzugt die entsprechenden Metallcarbonyle eingesetzt, wie vor allem Eisenpentacarbonyl, auch Chrom-, Molybdän- und Wolframhexacarbonyl, daneben Nickeltetracarbonyl und dimeres Cobalttetracarbonyl, die in einem Schutzgas wie Stickstoff oder Argon, das auch zur Verwirbelung des Substrats benutzt wird, zu den jeweiligen Metallen thermisch zersetzt werden.

Sollen die zweiten, schwarzen Schichten aus niederen Metalloxiden, wie Magnetit, VO₂ oder V₂O₃, bestehen, dann werden zweckmäßigerweise die Metallcarbonyle wie Eisenpentacarbonyl oder Oxychloride wie Vanadinoxychlorid mit Wasserdampf hydrolysiert. Zur Dosierung des Wasserdampfs wird ein inertes Trägergas, vor allem Stickstoff, mit dem auch das Substrat verwirbelt wird, mit Wasserdampf beladen. Werden bei dieser Gasphasenzersetzung zunächst höhere Metalloxide, beispielsweise V₂O₅ abgeschieden, so müssen diese anschließend z.B. mit Wasserstoff oder Ammoniak zum gewünschten Oxid reduziert werden.

Zur Abscheidung der dritten Schicht aus Metalloxid und auch der zweiten, beispielsweise aus Nickel- oder Cobaltoxid bestehenden Schicht werden flüchtige Metallverbindungen, bevorzugt die Carbonyle, Halogenide, insbesondere die Chloride, und die Alkoholate, sowohl aromatische wie Phenolate und Benzylalkoholate als auch aliphatische, vor allem C₁-C₄-Alkanolate wie n-, iso- und tert.-Butanolate, bevorzugt Methanolate und Ethanolate und besonders bevorzugt n- und iso-Propanolate zersetzt. Die Carbonyle werden dabei zweckmäßigerweise durch Sauerstoff im Gemisch im Stickstoff (z.B. Luft) oxidiert, während die Halogenide und Alkoholate durch Wasserdampf hydrolysiert werden, wobei im Fall der Halogenide Sauerstoff (bzw. Luft) anwesend sein kann. Dabei muß mindestens die stöchiometrisch zur Bildung des gewünschten Oxids und im Fall der Carbonyle von Kohlendioxid erforderliche Menge Sauerstoff oder Wasserdampf zugeführt werden, man kann jedoch auch mit einem geringen Überschuß arbeiten. Bei dieser Belegung kann sowohl Stickstoff als auch Luft als Wirbelgas dienen.

Bevorzugte Metallverbindungen sind Eisenpentacarbonyl, Chromhexacarbonyl, Aluminiumchlorid, Silicium-, Zinn-, Titan- und Zirkontetrachlorid, Vanadinoxychlorid sowie Titan- und Zirkon-n- und -iso-propanolat. Welche Metallverbindungen am günstigsten eingesetzt werden, hängt von der Art der bereits aufgebrachten zweiten Schicht ab. Handelt es sich beispielsweise um eine Metallschicht, dann werden vorzugsweise die Carbonyle oder Alkoholate eingesetzt.

Für alle Beschichtungen werden die Metallverbindungen zweckmäßigerweise in einer dem Reaktor vorgeschalteten Verdampfervorlage verdampft und mit einem Trägergas, je nach den erforderlichen Reaktionsbedingungen in der Regel Luft oder Stickstoff, in den Reaktor transportiert.

Um das Substrat gleichmäßig und vollständig umhüllende, homogene Schichten zu erhalten, sollte die Gasmenge der Metallverbindung im allgemeinen nicht mehr als 5 Vol.-%, vorzugsweise nicht mehr als 2 Vol.-% der Gesamtgasmenge im Reaktor betragen.

Nach jeweils abgeschlossener Belegung wird der Reaktor abgekühlt. Handelt es sich bei der aufgebrachten Schicht um ein Metall oder ein niederes Metalloxid, so wird dem Wirbelgas beim Abkühlen vorzugsweise Luft zugemischt, um die Schichtoberfläche durch Oxidation zu passivieren. Das abgekühlte Produkt wird dann ausgetragen.

Bei der Herstellung der erfindungsgemäßen dreifach beschichteten Glanzpigmente ist es nicht notwendig, das mit Metall oder schwarzem Metalloxid in zweiter Schicht belegte Substrat zu isolieren, vielmehr kann die dritte Beschichtung direkt anschließend an die zweite Beschichtung, gewünschtenfalls nach leichter Temperaturerniedrigung des Reaktorinhaltes und Passivierung, in demselben Reaktionsgefäß durchgeführt werden.

Das erfindungsgemäße Verfahren ermöglicht die Herstellung mehrfach beschichteter Glanzpigmente auf einfache Weise. Die Dicke der erzeugten Schichten kann gezielt und reproduzierbar über die Beschichtungsdauer, die Konzentration der eingesetzten Metallverbindung und das Verhältnis von vorgelegten Pigmentteilchen zu eingeleiteter Metallverbindung auf den gewünschten Wert eingestellt werden. Die auf diese Weise erhaltenen Glanzpigmente zeichnen sich durch hohe Qualität der Beschichtung, d.h. durch homogene, gleichmäßige, die Substratteilchen filmartig umhüllende Schichten aus, was sich durch die Leitfähigkeit der zweifach mit äußerer Metall- oder Magnetitschicht belegten Pigmente und durch die Farbtonreinheit und Farbstärke sowohl der zweifach als auch der dreifach belegten Pigmente zeigt.

Die erfindungsgemäßen Glanzpigmente eignen sich vorteilhaft für viele Zwecke, wie zur Einfärbung von Lacken, Druckfarben, Kunststoffen, Zubereitungen der dekorativen Kosmetik, Gläsern und keramischen Produkten. Durch ihre speziellen Eigenschaften ergeben sich weitere besondere Anwendungsmöglichkeiten. Die metallbeschichteten Pigmente können beispielsweise in elektrisch leitfähigen oder elektromagnetische Wellen abschirmenden Kunststoffen, Lacken und Beschichtungen eingesetzt oder in leitfähige Polymere eingearbeitet werden, ohne auf attraktive Farben verzichten zu müssen. Der ausgeprägte Hell/Dunkel-Flop beim Abkippen der applizierten schwarz beschichteten Pigmente bzw. der Farbflop der dreifach, mit farbigem Oxid beschichteten Pigmente ermöglicht die Herstellung von Sicherheits- und Effektfarben, vor allem für den Wertpapierdruck und zur Herstellung von fälschungssicheren Dokumenten. Durch das ausgezeichnete Deckvermögen insbesondere der dreifach beschichteten Pigmente kann vielfach auf sonst erforderliche Grundierungen verzichtet werden, was z.B. bei der Automobillackierung von besonderem Interesse ist.

### Beispiele

### Herstellung von erfindungsgemäßen Glanzpigmenten

Die in den Beispielen beschriebenen Beschichtungen von in der ersten Schicht mit Metalloxid belegten Glimmerpigmenten wurden jeweils in einem von außen beheizbaren Wirbelschichtreaktor aus Glas mit einem Durchmesser von 8 cm und einer Höhe von 80 cm mit Glasfrittenboden und oben eingehängten, mit einem Stickstoff-Jet abreinigenden Filterstrümpfen und zwei seitlich oberhalb des Frittenbodens eingebrachten Düsen zur Gaseinleitung durchgeführt.

### A) Herstellung von zweifach beschichteten Glanzpigmenten

### Beispiele 1 bis 9

200 g des jeweils in der folgenden Tabelle angegebenen, mit Metalloxid beschichteten Glimmerpigments wurden im Wirbelschichtreaktor unter Verwirbelung mit einem Stickstoffstrom von insgesamt 600 bis 800 l/h auf 200°C erhitzt. Über eine auf die Verdampfungstemperatur V [°C] aufgeheizte Glasvorlage wurden x g Metallcarbonyl in einem Stickstoffstrom von y l/h zugeführt.

Nach beendeter Metallabscheidung und Abkühlung auf Raumtemperatur wurde den Wirbelgasen zur Passivierung der Oberfläche der Metallschicht langsam Luft zugeleitet. Anschließend wurde das beschichtete Pigment ausgetragen.

Zur Bestimmung der elektrischen Leitfähigkeit wurden jeweils etwa 0,5 g Pigment bei einem Druck von 500 bar auf etwa 0,1 cm Dicke und 0,2 cm Durchmesser verpreßt. Mit den Widerstandsmeßgeräten M 2031 BBC Goerz Metrawatt (geeignet für gute Leiter) und Teraohm-Meter (Fa. Knick; geeignet für Isolatoren) wurde der-Widerstand der Proben gemessen und in bekannter Weise auf die spezifische elektrische Leitfähigkeit umgerechnet.

Einzelheiten zu diesen Versuchen sowie deren Ergebnisse sind in der folgenden Tabelle zusammengestellt.

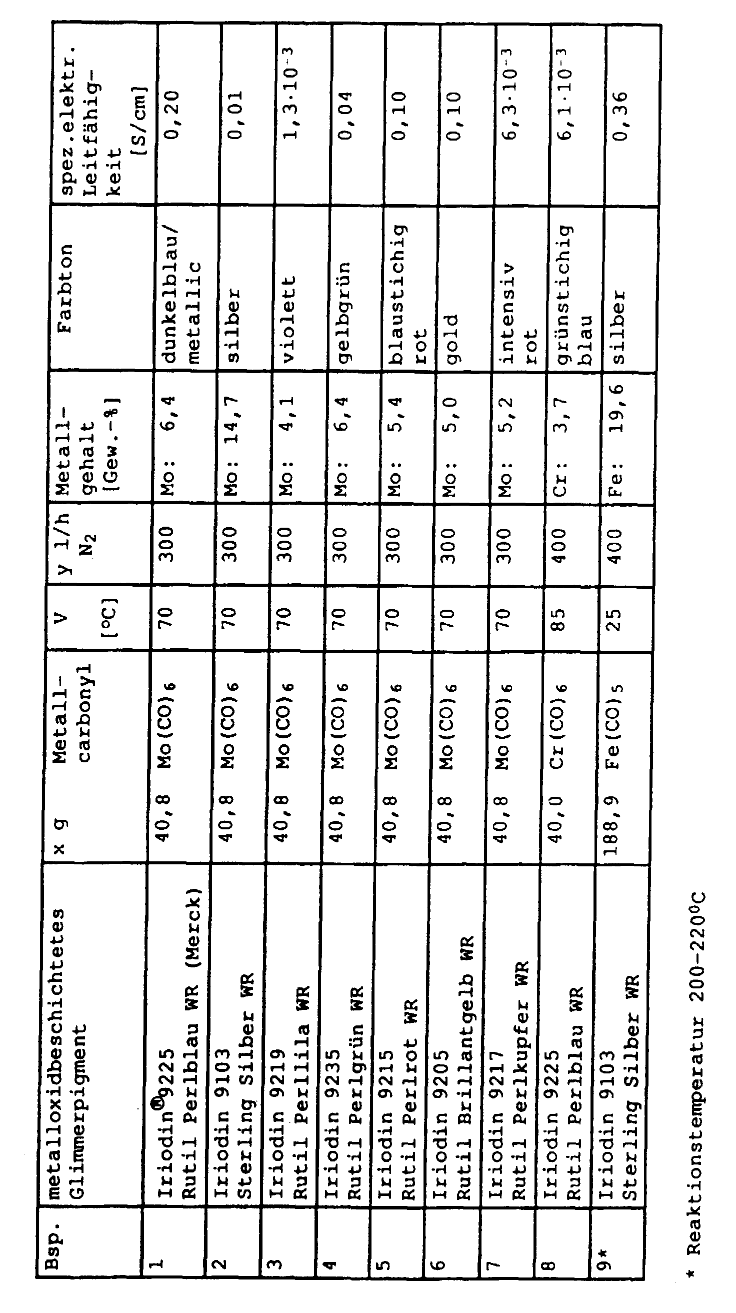

### Beispiel 10

50 g des Glimmerpigmentes Iriodin 9225 Rutil Perlblau wurden unter Rühren in eine Lösung von 4 g Sorbit in 50 ml Wasser eingetragen. Die gebildete Masse wurde 10 h bei 100°C getrocknet, anschließend grob zerkleinert und dann in einem Drehkugelofen innerhalb von 1 h in Stickstoffatmosphäre auf 450°C erhitzt und 3 h bei dieser Temperatur gehalten. Dann wurde ebenfalls unter Stickstoff abgekühlt.

Das erhaltene Pigment hatte einen Kohlenstoffgehalt von 1,1 Gew.% und war intensiv blau gefärbt.

### Beispiel 11

200 g des Glimmerpigmentes Iriodin 9225 Rutil Perlblau wurden im Wirbelschichtreaktor unter Verwirbelung mit einem Stickstoffstrom von insgesamt 800 l/h auf 180°C erhitzt. Die Hälfte der Wirbelgase wurde bei der anschließenden Belegung über eine auf 50°C geheizte Wasservorlage geleitet. Zur Belegung wurden 72,7 g bei Raumtemperatur verdampftes Eisenpentacarbonyl in einem Stickstoffstrom von 400 l/h zugeleitet.

Nach beendeter Beschichtung wurde auf Raumtemperatur abgekühlt.

Das erhaltene magnetitbeschichtete Pigment hatte einen Eisengehalt von 7,5 Gew.-%, einen grünstichig blauen Farbton und eine spezifische elektrische Leitfähigkeit von 7,3·10⁻³ S/cm.

### B) Herstellung von dreifach beschichteten Glanzpigmenten

### Beispiel 12

200 g des Glimmerpigmentes Iriodin 9215 Rutil Perlrot WR wurden im Wirbelschichtreaktor unter Verwirbelung mit einem Stickstoffstrom von insgesamt 800 l/h auf 200°C erhitzt. Dann wurden 53 g bei Raumtemperatur verdampftes Eisenpentacarbonyl mit der Hälfte der Wirbelgase innerhalb von 4 h zugeführt. Eine nach beendeter Eisenabscheidung entnommene Probe war intensiv rot gefärbt und hatte einen Eisengehalt von 6,9 Gew.-%.

Nach Abkühlung auf 100°C wurde den Wirbelgasen zur Passivierung der Metalloberfläche etwas Luft zugemischt.

Für die anschließende Beschichtung wurde erneut auf 180°C erhitzt. Den Wirbelgasen wurden bei der Zuführung von 375 g Eisenpentacarbonyl (Stickstoffstrom von 400 l/h) zusätzlich 200 l/h Luft beigemischt. Mit zunehmender Dicke der auf den Pigmentteilchen abgeschiedenen Eisenoxidschicht wurden die Farbtöne rot - blaustichig rot - blau - grün - gelb - goldgelb - gelbrot - rot durchlaufen.

Das erhaltene dreifach beschichtete Pigment hatte bei einem Gesamteisengehalt von 26 Gew.-% einen roten Farbton und zeigte, in Lack appliziert, beim Abkippen einen effektvollen Hell/Dunkel-Flop.

### Vergleichsbeispiel

Analog zu Beispiel 12 wurde das Glimmerpigment nur mit Eisenoxid beschichtet.

Die Applikation des erhaltenen roten Pigmentes sowie auch jeweils während der laufenden Beschichtung entnommener Proben in Lack zeigten im Vergleich zu den Proben aus Beispiel 12 durchweg schlechteres Deckvermögen und weniger ausgeprägten Hell/Dunkel-Flop.

### Beispiel 13

Analog zu Beispiel 12 wurden 200 g des Glimmerpigmentes Iriodin 9225 Rutil Perlblau WR durch Zersetzung von 50 g Eisenpentacarbonyl zunächst mit einer Eisenschicht belegt. Anschließend wurde durch Oxidation von 276 g Eisenpentacarbonyl noch eine Eisenoxidschicht aufgebracht.

Das erhaltene Pigment hatte einen Gesamteisengehalt von 24,8 Gew.-% und war intensiv rot gefärbt.

### Beispiel 14

200 g des Glimmerpigmentes Mearl® Brillant Gold (Fa. Mearl) wurden zunächst analog zu Beispiel 1 durch Zersetzung von 20,5 g Molybdänhexacarbonyl mit metallischem Molybdän belegt, wonach das Pigment goldgelb gefärbt war. Die Reaktortemperatur wurde anschließend auf 180°C abgesenkt. Dann wurden 175 g bei Raumtemperatur verdampftes Eisenpentacarbonyl in einem Stickstoffstrom von 250 l/h zugeführt.

Nach üblicher Weiterbehandlung wurde ein gut deckendes Effektpigment mit grüner Interferenzfarbe und einem Molybdängehalt von 2,4 Gew.-% und einem Eisengehalt von 14,8 Gew.-% erhalten.

### Beispiel 15

200 g des Glimmerpigmentes Iriodin 9205 Rutil Brillantgelb WR wurden 2 h in einer 10 gew.-%igen wäßrigen Lösung von Sorbit gerührt, abfiltriert und 10 h bei 100°C getrocknet. Dann wurde das verbackene Produkt in einem Drehkugelofen unter Stickstoff innerhalb von 2 h auf 450°C erhitzt und 3 h bei dieser Temperatur gehalten. Das nach dem Abkühlen unter Stickstoff erhaltene von einer homogenen Kohlenstoffschicht überzogene Pigment zeigte eine intensivierte gelbe Farbe.

Das mit Ruß belegte Pigment wurde anschließend im Wirbelschichtreaktor unter Verwirbelung mit einem Stickstoffstrom von insgesamt 800 l/h auf 180°C erhitzt. Bei Beginn der Zuführung von 131 g bei Raumtemperatur verdampftem Eisenpentacarbonyl in einem Stickstoffstrom von 400 l/h wurde den Wirbelgasen zur Abscheidung von Eisenoxid 200 l/h Luft zugemischt.

Nach üblicher Weiterbehandlung wurde ein blaustichig grünes Pigment mit einem Kohlenstoffgehalt von 0,8 Gew.-% und einem Eisengehalt von 13,6 Gew.-% erhalten.

## Patentansprüche

1. Glanzpigmente auf der Basis von mehrfach beschichteten plättchenförmigen silikatischen Substraten, erhältlich durch weiteres Belegen der bereits mit einer ersten Schicht aus farblosem oder selektiv absorbierendem Metalloxid belegten Substrate
a) zunächst mit einer zweiten, nichtselektiv absorbierenden Schicht, im wesentlichen bestehend aus Kohlenstoff, Metall und/oder Metalloxid, und
b) gewünschtenfalls anschließend mit einer dritten Schicht aus farblosem oder selektiv absorbierendem Metalloxid, wobei die dritte Schicht im Falle einer im wesentlichen aus Kohlenstoff bestehenden zweiten Schicht zwingend ist und
wobei
die Kohlenstoffschicht (Schritt a) durch thermische Zersetzung von sauerstoffhaltigen Kohlenwasserstoffen, die bei zwei enthaltenen Kohlenstoffatomen mindestens ein Sauerstoffatom enthalten,
die Metallschicht (Schritt a) durch Gasphasenzersetzung flüchtiger Verbindungen dieser Metalle in einem Inertgas und
die Metalloxidschicht (Schritt a und/oder b) durch Gasphasenzersetzung flüchtiger Verbindungen dieser Metalle in Gegenwart von Sauerstoff, Wasserdampf oder deren Mischungen
auf die im Fall a) mit einer ersten Metalloxidschicht und im Fall b) zusätzlich mit einer nichtselektiv absorbierenden Schicht (a) belegten Substrate aufgebracht wird.

2. Glanzpigmente auf der Basis von mehrfach beschichteten plättchenförmigen silikatischen Substraten mit
A) einer erstem Schicht aus farblosem oder selektiv absorbierendem Metalloxid,
B1) einer zweiten, nichtselektiv absorbierenden Schicht, im wesentlichen bestehend aus metallischem Eisen, Molybdän und/oder Wolfram, oder
B2) einer zweiten, nicht selektiv absorbierenden, aus Kohlenstoff bestehenden Schicht und
C) gewünschtenfalls einer dritten Schicht aus farblosem oder selektiv absorbierendem Metalloxid, wobei die dritte Schicht im Falle einer aus Kohlenstoff bestehenden zweiten Schicht zwingend ist,
die durch den gleichmäßigen und filmartigen Aufbau der Schichten gekennzeichnet sind.

3. Glanzpigmente nach den Anspruch 1 oder 2, bei denen die erste Schicht aus Titan-, Zirkon-, Zinn- und/oder Eisenoxid besteht.

4. Glanzpigmente nach Anspruch 1, bei denen die zweite, nichtselektiv absorbierende Schicht aus Kohlenstoff, Eisen, Cobalt, Nickel, Chrom, Molybdän, Wolfram, Magnetit, Nickeloxid, Cobaltoxiden und/oder Vanadinoxiden besteht.

5. Glanzpigmente nach Anspruch 1 oder 2, bei denen die dritte Schicht aus Titan-, Zirkon-, Chrom- und/oder Eisenoxid besteht.

6. Verfahren zur Herstellung von Glanzpigmenten auf der Basis von mehrfach beschichteten plättchenförmigen silikatischen Substraten nach den Verfahrensschritten gemäß Anspruch 1.

7. Verfahren nach Anspruch 6, dadurch gekennzeichnet, daß man als flüchtige Verbindungen der Metalle in Schritt a) die Carbonyle und in Schritt b) die Carbonyle, halogenide, Oxychloride oder Alkoholate einsetzt.

8. Verwendung der Glanzpigmente gemäß den Ansprüchen 1 oder 2 zur Einfärbung von Lacken, Druckfarben, Kunststoffen, Zubereitungen der dekorativen Kosmetik, Gläsern und keramischen Produkten.

## Claims

1. Luster pigments based on multiply coated plateletlike silicatic substrates, obtainable by further coating substrates already coated with a first layer comprising a colorless or selectively absorbing metal oxide
a) initially with a second, nonselectively absorbing layer consisting essentially of carbon, metal and/or metal oxide, and
b) if desired subsequently with a third layer comprising colorless or selectively absorbing metal oxide, the third layer being compulsory in the case of a second layer consisting essentially of carbon,
wherefor
the carbon layer (step a) is applied by thermal decomposition of oxygen-containing hydrocarbons that for every two carbon atoms contain at least one oxygen atom,
the metal layer (step a) is applied by gas phase decomposition of volatile compounds of these metals in an inert gas, and
the metal oxide layer (step a and/or b) is applied by gas phase decomposition of volatile compounds of these metals in the presence of oxygen, water vapor or mixtures thereof
to the substrates coated in case a) with a first metal oxide layer and in case b) additionally with a nonselectively absorbing layer (a).

2. Luster pigments based on multiply coated plateletlike silicatic substrates comprising
A) a first layer comprising colorless or selectively absorbing metal oxide,
B1) a second, nonselectively absorbing layer consisting essentially of metallic iron, molybdenum and/or tungsten, or
B2) a second, nonselectively absorbing layer consisting of carbon, and
C) if desired a third layer comprising colorless or selectively absorbing metal oxide, the third layer being compulsory in the case of a second layer consisting of carbon,
which are characterized by the uniform and filmlike structure of the layers.

3. Luster pigments as claimed in claim 1 or 2, wherein the first layer comprises titanium oxide, zirconium oxide, tin oxide and/or iron oxide.

4. Luster pigments as claimed in claim 1, wherein the second, nonselectively absorbing layer comprises carbon, iron, cobalt, nickel, chromium, molybdenum, tungsten, magnetite, nickel oxide, cobalt oxides and/or vanadium oxides.

5. Luster pigments as claimed in claim 1 or 2, wherein the third layer comprises titanium oxide, zirconium oxide, chromium oxide and/or iron oxide.

6. A process for preparing luster pigments based on multiply coated plateletlike silicatic substrates by the steps set forth in claim 1.

7. A process as claimed in claim 6, wherein the volatile metal compounds used in step a) are the carbonyls and in step b) the carbonyls, halides, oxychlorides or alkoxides.

8. The use of the luster pigments of claims 1 or 2 for coloring coatings, printing inks, plastics, decorative cosmetic preparations, glasses and ceramic products.

## Revendications

1. Pigments brillants à base de substrats silicatés, en forme de plaquettes ou paillettes revêtues de multiples fois, que l'on peut obtenir par le revêtement ultérieur des substrats déjà revêtus d'une première couche d'un oxyde de métal incolore ou sélectivement absorbant,
a) d'abord par une seconde couche non sélectivement absorbante, constituée, en essence, de carbone, de métal et/ou d'oxyde de métal et
b) éventuellement ensuite, par une troisième couche en oxyde de métal incolore ou sélectivement absorbant, où la troisième couche est obligatoire dans le cas d'une seconde couche essentiellement constituée de carbone et
où on applique
la couche de carbone (étape a) par décomposition thermique d'hydrocarbures contenant de l'oxygène, qui contiennent au moins un atome d'oxygène par deux atomes de carbone,
la couche de métal (étape a) par décomposition en phase gazeuse de composés volatils de ces métaux dans un gaz inerte et
la couche d'oxyde de métal (étapes a et/ou b) par décomposition en phase gazeuse de composés volatils de ces métaux, en présence d'oxygène, de vapeur d'eau, ou de leurs mélanges,
sur les substrats revêtus, dans le cas a), d'une première couche d'oxyde de métal et, dans le cas b), complémentairement d'une couche non sélectivement absorbante a).

2. Pigments brillants à base de substrats silicatés, en forme de plaquettes ou de paillettes, de multiples fois revêtus par
A) une première couche d'oxyde de métal incolore ou sélectivement absorbant,
B1) d'une seconde couche non sélectivement absorbante, essentiellement constituée de fer métallique, de molybdène et/ou de tungstène, ou
B2) d'une deuxième couche non sélectivement absorbante, constituée de carbone et
C) éventuellement une troisième couche d'oxyde de métal incolore ou sélectivement absorbant, où la troisième couche est obligatoire dans le cas d'une seconde couche constituée de carbone,
caractérisés par la structure régulière et en forme de film des couches.

3. Pigments brillants suivant la revendication 1 ou 2, dans lesquels la première couche est constituée d'oxyde de titane, de zirconium, d'étain et/ou de fer.

4. Pigments brillants suivant la revendication 1, dans lesquels la seconde couche, non sélectivement absorbante, est constituée de carbone, de fer, de cobalt, de nickel, de chrome, de molybdène, de tungstène, de magnétite, d'oxyde de nickel, d'oxydes de cobalt et/ou d'oxydes de vanadium.

5. Pigments brillants suivant la revendication 1 ou 2, dans lesquels la troisième couche est constituée d'oxyde de titane, de zirconium, de chrome et/ou de fer.

6. Procédé de fabrication de pigments brillants à base de substrats silicatés, en forme de plaquettes ou de paillettes, de multiples fois revêtus, selon les étapes opératoires indiquées dans la revendication 1.

7. Procédé suivant la revendication 6, caractérisé en ce que l'on utilise, à titre de composés volatils des métaux de l'étape a), les carbonyles et, dans l'étape b), les carbonyles, halogénures, oxychlorures, ou alcoolates.

8. Utilisation des pigments brillants suivant les revendications 1 ou 2 pour la teinture de laques ou peintures, d'encres d'impression, de matières plastiques, de préparations des produits céramiques, de verres et d'esthétique, décoratifs.
